# EUROPEAN PATENT APPLICATION

(11) **EP 4 155 650 A1**
(43) Date of publication of application: **29.03.2023**
(21) Application number: 21198765.6
(22) Date of filing: 24.09.2021
(51) Int. Cl.: F28D 20/00, F28F 27/00, G01K 11/32, G01K 11/3206

(54) **HEAT ACCUMULATOR COMPRISING AN OPTICAL FIBRE FOR TEMPERATURE MEASUREMENT**

(71) Applicant: Siemens Gamesa Renewable Energy GmbH & Co. KG, 20097 Hamburg (DE)
(72) Inventor: Eggers, Jan Rudolf, 21640 Bliedersdorf (DE); Lange, Eckart Matthias, 22767 Hamburg (DE); Thaele, Sören Hendrik, 22111 Hamburg (DE)
(74) Representative: SGRE-Association

(57) **Abstract**

It is described a heat accumulator (1) comprising: a heat exchange chamber (2); an amount of heat storage elements (4) filled in the heat exchange chamber (2); an optical fibre (6) being arranged in or at the heat exchange chamber (2); an emitter (7) which emits an electromagnetic radiation into the optical fibre (6); a receiver (8) which receives the electromagnetic radiation from the optical fibre (6); a converter (11) which converts the electromagnetic radiation received by the receiver (8) into an electric signal; and a determining unit (12) which determines a temperature in or at the heat exchange chamber (2) based on the electric signal.

## Description

### Field of invention

The present invention relates to a heat accumulator and a method of determining a spatial temperature distribution in a heat accumulator.

In an electro-thermal energy storage system, energy may be stored which was for example generated by an electrical heater system from electric energy for example generated by a renewable energy generation system, such as a solar plant or a wind park or so forth.

For charging a heat storage, electrical energy is utilized by a heater system to generate heat energy and to heat a heat transfer fluid. The heat transfer fluid is then guided through a heat storage, where the heat energy of the heat transfer fluid is at least partly transferred to heat storage material comprised in the heat storage. During a discharge operation, relatively cold transfer fluid is guided through the heat storage comprising heat storage material. The transfer fluid then acquires some of the heat energy from the material comprised in the heat storage and the transfer fluid heated up may be supplied to a heat consumer which in turn utilizes the heat energy for any downstream processes, for example to again transform the heat energy back to for example electrical energy or mechanical energy. During the discharge operation, the transfer fluid guided through and output from the heat storage may have a temperature which may be too high for the heat consumer. Therefore, the heat transfer fluid heated by the heat storage may be merged with a portion of heat transfer fluid which has a lower temperature, for example by supplying the heat transfer fluid flown through the heater flow path.

Measurement points distributed in a heat accumulator are required to obtain the spatial temperature distribution. As each sensor can only produce one discrete temperature point, a large number of measurement points is needed, which add up to an expensive and complex solution. In order to be able to draw conclusions and insights from the measurement data, it must be possible to hold the measurement points in place as well as to know their precise location within the heat accumulator. In addition, the sensors must be accessible for potential maintenance and need to be replaceable.

Conventionally, standard resistance thermometers or thermocouples are used to measure the temperature in the heat accumulator, which unfortunately only have a limited lifetime and become unusable in the event of sensor failure. During the operation of the conventional sensors, the measured signal can change with time and differ from the expected value. This phenomenon is called drift and is a source of error in conventional sensors. The installation of the thermocouples also turns out to be complex, as each element must be pulled through all insulation and structural layers. Especially thermocouples placed inside a pebble bed or the insulation are not replaceable as they are hardly accessible.

### Summary of the Invention

It is the object of the present invention to provide a heat accumulator and a method of determining a spatial temperature distribution in a heat accumulator, which overcome the above-mentioned problems. This object is achieved by the subject matters according to the independent claims. The present invention is further developed as set forth in the dependent claims.

According to a first aspect of the invention, a heat accumulator comprises a heat exchange chamber having a first opening configured to pass through a working fluid and a second opening configured to pass through a working fluid; an amount of heat storage elements filled in the heat exchange chamber; an optical fibre being arranged in or at the heat exchange chamber; an emitter which emits an electromagnetic radiation into the optical fibre; a receiver which receives the electromagnetic radiation from the optical fibre; a converter which converts the electromagnetic radiation received by the receiver into an electric signal; and a determining unit which determines a temperature in or at the heat exchange chamber based on the electric signal.

An "opening configured to pass through a working fluid" is considered to comprise the embodiment that the opening is configured to guide a working fluid such that the working fluid passes through the opening.

"Amount of heat storage elements filled in the heat exchange chamber" is represented by a plurality of heat storage elements - like rock, stones, pebble - present inside a boundary of the heat exchange chamber such that the heat storage elements are filling the heat exchange chamber.

The present invention integrates a fibre optical measurement in the heat accumulator to receive information about the temperature distribution within the storage volume. The optical fibre exhibits immunity to electromagnetic interferences, chemical resistance, low signal attenuation and large multiplexing capacity, which makes it well suited for sensing also under harsh conditions.

In an embodiment, the optical fibre is wrapped around the amount of heat storage elements. Preferably, the optical fibre is helically wrapped around the amount of heat storage elements. Thereby, the heat accumulator needs only a few or even only one optical fibre which can cover the entire or nearly the entire heat exchanger chamber. The low number of optical fibres reduces the number of emitters and receivers and thus the complexity in the evaluation by the determining unit. Furthermore, the loose heat storage elements can be reinforced by the optical fibre.

In an embodiment, a plurality of optical fibres is provided in a two-dimensional or three-dimensional matrix. Thereby, a heat distribution in the shape of a well-defined matrix can be measured.

In an embodiment, the optical fibre is loosely arranged within the amount of heat storage elements. Thereby, the optical fibre can flexibly adapt its shape to the surrounding amount of heat storage elements.

In an embodiment, a plurality of optical fibres is provided, wherein the optical fibres extend in different planes. In an embodiment, the planes are in parallel to each other. In an embodiment, the planes either extend horizontally, vertically or inclined. Thereby, a well-defined heat distribution can be measured. Here, the expression "inclined" means neither horizontally nor vertically.

In an embodiment, a plurality of optical fibres is provided, wherein the optical fibres extend in the same plane.

In an embodiment, the optical fibre is embedded in a protection device. In an embodiment, the protection device is a flow guiding element, a structural support element, a channel, a tube or a plate. The protection devices are not limited in terms of shape, size, number, arrangement, or other characteristics. In an embodiment, a plurality of optical fibres is embedded in the plate. Thereby, the installation of the optical fibre is facilitated.

In an embodiment, the heat exchange chamber comprises an insulation, and the optical fibre is embedded in the insulation. Thereby, the installation of the optical fibre is facilitated. In an embodiment, at least one thermal insulation layer is at least partly arranged in a heat exchange chamber interior between heat exchange chamber boundaries and the amount of heat storage elements. In a preferred embodiment, the thermal insulation layer comprises at least one thermal insulation material which is selected from the group consisting of ceramics, sinter, bricks, foamed clay, mineral wool, mineral foam, mineral fibers, foam glass, vermiculite, perlite, chamotte, formed vacuum components, calciumsilicat and microporous insulation material.

In an embodiment, the optical fibre is meandering so that a single optical fibre or only a few optical fibres are used to measure a heat distribution within the heat accumulator.

In an embodiment, the determining unit determines the temperature in or at the heat exchange chamber based on the electric signal by using either the principle of Fibre-Bragg-Gratings (FBG), Optical-Fibre-Time-Domain-Reflectometry (OTDR), or Optical-Frequency-Domain-Reflectometry (OFDR).

According to a second aspect of the invention, a method of determining a spatial temperature distribution in a heat accumulator is provided. The heat accumulator comprises a heat exchange chamber having a first opening configured to pass through a working fluid and a second opening configured to pass through a working fluid; an amount of heat storage elements filled in the heat exchange chamber; at least one optical fibre being arranged in or at the heat exchange chamber and connected to an emitter, which emits an electromagnetic radiation into the optical fibre, and to a receiver, which receives the electro-magnetic radiation from the optical fibre; and a converter which converts the electromagnetic radiation received by the receiver into an electric signal. The method comprises the following steps: determining temperatures at several locations of the at least one optical fibre based on the electric signal at a given time; acquiring information about the locations of the at least one optical fibre in the heat exchange chamber; calculating the spatial temperature distribution in a heat accumulator based on the determined temperatures and based on the information about the locations of the at least one optical fibre in the heat exchange chamber; and outputting the calculated spatial temperature distribution of the given time.

Fiber optic measurement has unique advantages compared to thermocouple measurement, such as the possibility of distributed measurement over a long distance within the thermal storage volume. When using optical fibers, many measurement points are generated, enabling along the optical fibre a spatial continuous temperature measurement with respect to the spatial temperature distribution. In contrast, each thermocouple represents only one measurement point. Optical fibers have a longer lifetime and can be easily replaced, if they are arranged or embedded in the thermal insulation or in the protection device. This is especially true when placed inside tubes or outside the pebble bed. They can be flexibly installed within the thermal energy storage. Another advantage of fiber optic temperature measurement over thermocouples is that they suffer less from drifting behavior. Drift is a source of error in the conventional temperature sensors. It occurs because of metallurgical changes of the conventional temperature sensors during the operation of the thermocouple. Each thermocouple has a cable that must be guided out of the thermal energy store. Since each thermocouple provides only one measuring point, many cables must be laid. Fiber optic temperature measurement, however, requires a highly reduced cable effort. Furthermore, fewer cables must be guided through structural and insulating layers.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a heat accumulator according to an embodiment;
- Fig. 2: shows a cross-section of an optical fibre;
- Fig. 3: shows a longitudinal section of an optical fibre;
- Fig. 4: shows a temperature measurement using the principle of Fibre-Bragg-Gratings (FBG);
- Fig. 5: shows the temperature measurement using the principle of Fibre-Bragg-Gratings (FBG);
- Fig. 6: shows an embodiment of arranging an optical fibre;
- Fig. 7: shows an embodiment of arranging an optical fibre;
- Fig. 8: shows an embodiment of arranging an optical fibre;
- Fig. 9: shows an embodiment of arranging an optical fibre;
- Fig. 10: shows an embodiment of arranging an optical fibre;
- Fig. 11: shows an embodiment of arranging an optical fibre;
- Fig. 12: shows an embodiment of arranging an optical fibre;
- Fig. 13: shows an embodiment of arranging an optical fibre;
- Fig. 14: shows an embodiment of arranging an optical fibre;
- Fig. 15: shows an embodiment of arranging an optical fibre;
- Fig. 16: shows an embodiment of arranging an optical fibre;
- Fig. 17: shows an embodiment of arranging an optical fibre;
- Fig. 18: shows an embodiment of arranging an optical fibre;
- Fig. 19: shows a block diagram of a method of determining a spatial temperature distribution in a heat accumulator according to an embodiment.

### Detailed Description

The illustrations in the drawings are schematically. It is noted that in different figures, similar or identical elements are provided with the same reference signs.

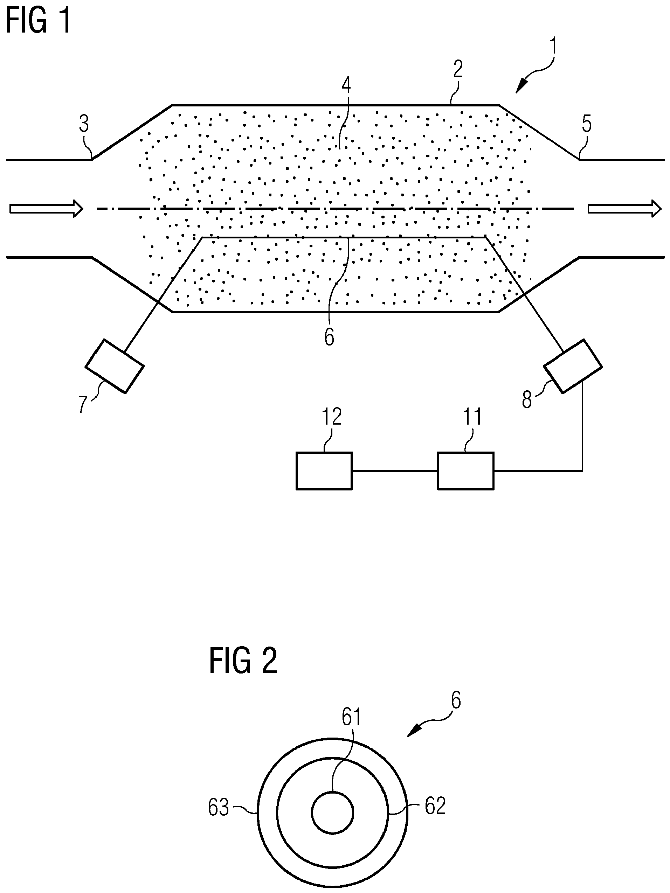

**Fig. 1** shows a schematic longitudinal section of a heat accumulator 1 according to an embodiment. The heat accumulator 1 comprises a heat exchange chamber 2 which is defined by a wall or a plurality of walls. The heat exchange chamber 2 has a first opening 3 configured to pass through a working fluid and a second opening 5 configured to pass through a working fluid. The heat accumulator 1 is horizontally operated in the intended use because a working fluid flow between the first and second openings 3, 5 is substantially horizontal. The present invention is also applicable to a heat accumulator 1 which is configured to be vertically operated, wherein a working fluid flow between the first and second openings 3, 5 is substantially vertical.

A plurality of heat storage elements 4 for storing thermal energy is filled in the heat exchange chamber 2. The heat storage elements 4 are provided as bulk material and have a relatively high thermal storage capacity. Preferably, a material of the heat storage elements 4 comprises sand and/or stones. The heat exchange chamber 2 may comprise multiple different heat storage elements 4. The stones can be natural stones or artificial stones. Mixtures thereof are possible, too. Artificial stones can consist of containers which are filled with heat storage material. Preferably, the stones comprise gravels (pebbles), rubbles and/or grit (splits). The artificial material comprises preferably clinkers, ceramics, steel or steel slack pellets. The stones may in particular be selected from the group of bricks, volcanic rocks, granites, basalts or ceramics provided as bulk material, for example. This can also be called pebble bed. However, the present invention is not limited to these examples.

The first opening 3 serves as an inlet (which can also be a combined in- and outlet) configured to supply the hot working fluid into the heat exchange chamber 2. The working fluid can be water, hot or relatively cold steam, air, nitrogen or argon, etc. The thus cooled working fluid leaves the heat exchange chamber 2 via the second opening 5 which serves as an outlet (or a combined in- and outlet).

After the charging is completed, the heat exchange chamber 2 may be left in a standstill period of hours or even days until the stored thermal energy is needed and discharged by feeding another, cold working fluid to the second opening 5 (which is then used as an inlet for the cold working fluid). After having flowed through the heat exchange chamber 2 and the heat storage elements 4, the thus heated working fluid is ejected from the first opening 3 (which is then used as an outlet for the cold working fluid). The flow of the cold working fluid is indicated by arrows from the right side to the left side in Fig. 1. However, the present invention is applicable to heat accumulators 1 with any other flow directions.

The heat accumulator 1 further comprises an optical fibre 6 which is arranged in (or at) the heat exchange chamber 2, an emitter 7 which emits an electromagnetic radiation into the optical fibre 6; a receiver 8 which receives the electromagnetic radiation from the optical fibre 6. The heat accumulator 1 further comprises a converter 11 which converts the electromagnetic radiation received by the receiver 8 into an electric signal; and a determining unit 12 which determines a temperature in or at the heat exchange chamber 2 based on the electric signal. The optical fibre 6 achieves an immunity to electromagnetic interferences, chemical resistance, low signal attenuation and large multiplexing capacity, which makes it well suited for temperature sensing also under harsh conditions. In Fig. 1, the emitter 7 and the receiver 8 are connected to the optical fibre 6 at different ends thereof; however, under practical reasons, the emitter 7 and the receiver 8 can be connected to the optical fibre 6 at one and the same end of the optical fibre 6. The emitter 7 and the receiver 8 are usually arranged outside the heat exchange chamber 2.

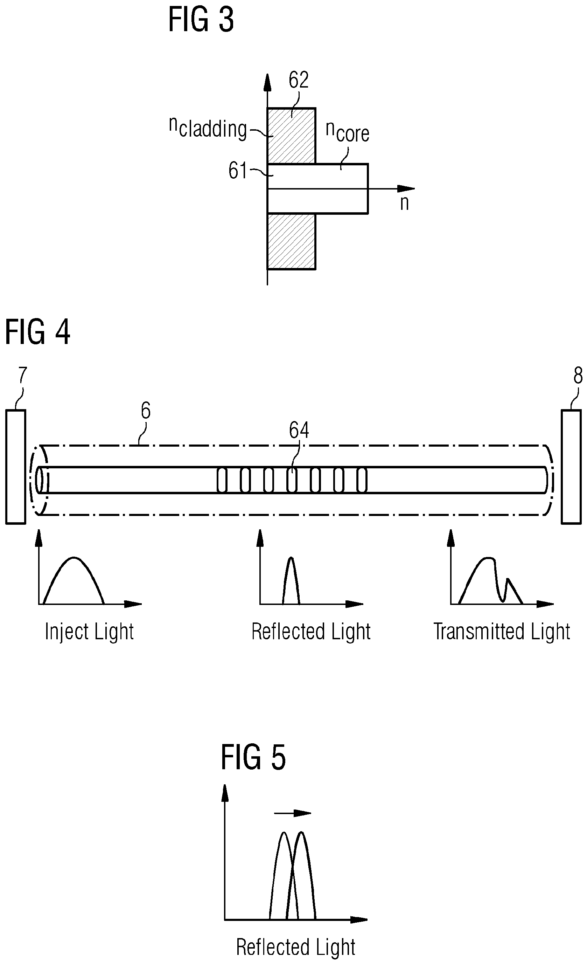

**Fig. 2** shows a cross-section of an optical fibre 6, and **Fig. 3** shows a longitudinal section of the optical fibre 6. The optical fibre system has three basic components: the emitter 7, the optical fibre 6 and the receiver 8. There are different types of emitters 7 including light emitting diodes and various types of lasers. The optical fibre system converts an electrical signal into an optical signal which can be carried by the optical fibre 6. The optical fibre 6 serves as a radiation guiding system to convey light from the emitter 7 to a desired destination. Here, the light reflects or scatters and is then delivered to the receiver 8, which performs the opposite function of the emitter 7 and therefore converts the optical signals back to electrical signals. The optical fibre 6 acts as the transmission channel guiding the light beam loaded with information.

Figures 2 and 3 show the optical fibre 6 which consists of a central dielectric core 61 with refractive index n_{core} cladded by a material 62 of slightly lower refractive index n_{cladding}. An additional protective layer 63, the coating, protects the dielectric core 61 and the material 62 from any damage. The protective layer 63 is not essential and can be omitted. Instead of the protective layer 63, a protective device can be used as described later.

A light beam is guided through the optical fibre 6, i.e., through the dielectric core 61, due to the phenomenon of total internal reflection in step index fibres. In gradient fibres, the light beam propagates via diffraction. When a ray of light is incident at the interface of two media, it undergoes partial reflection und partial refraction. For light propagating from denser to a less dense medium, if the angle of refraction is 90°, the corresponding angle of incidence is called critical angle. If a light ray is incident at the interface of two media with an angle greater than the critical angle, it is completely reflected back to the denser medium. This effect is called total internal reflection and occurs only when the refractive index of the core 61 is greater than the refractive index of the cladding 62. By multiple total internal reflections at the core-cladding interface, the light propagates throughout the optical fibre 6 over very long distances with low attenuation.

To shield the central dielectric core 61 and the material 62 from mechanical stress by the protective layer 63, in particular when the optical fibre 6 does not have any protective layer 63, there are many different embodiments to implement them inside the storage. They can either be inserted as pure fibre in an protective tube of a very small diameter made of steel, an alloy or a heat resistive synthetic resin. Thereby, a mechanical decoupling can be guaranteed. They can otherwise be implemented with a cable sheathed with several protective layers. For higher temperature applications, metallic coatings 63, such as gold coatings, are required. The optical fibre 6 can be integrated into the thermal energy storage device 1 in a variety of different ways. The number, dimensions (e.g., length, diameter) and shape of the optical fibre 6 are not generally limited.

**Figures 4 and 5** show a temperature measurement using the principle of Fibre-Bragg-Gratings (FBG). The FBG principle is based on the inscription of a longitudinal refractive index grating structure 64 inside the core 61 of a single mode optical fibre 6, using either a UV or femtosecond laser. This grating structure acts 64 as a band-rejection optical filter passing all wavelength of light that are not in resonance with it and reflecting wavelengths that satisfy the Bragg-condition of the core index modulation.

This so-called Bragg-wavelength is given by ***λB* =** 2*·**neff**·***Λ**, where ***neff*** is the effective refractive index of the fibre and **Λ** the grating period. Both parameters depend on temperature and shift the Bragg-wavelength accordingly. Once this relation is characterized for a FBG sensor, a temperature can be directly derived from a measurement of the Bragg center wavelength. Several FBGs can be induced in one optical fibre 6, each of them functioning as a sensor position.

Another embodiment of the present invention is based on Optical-Fibre-Time-Domain-Reflectometry (OTDR). Optical time domain reflectometers are instruments which measure the spatially resolved reflectivities and losses in optical fibres. In the OTDR, high-power optical pulses are launched into the optical fibre 6, that is used as a distributed sensor, the pulses are scattered back along with propagation in the optical fibre 6, and their intensity decays due to fibre loss. The return signal is thus a declined curve displayed in an oscilloscope. The fibre loss coefficient can be measured by the curve. Any lumped nonuniform points in the fibre, such as connections, fusions, faults, and extra losses, cause additional reflections and losses, showing a sharp peak and dip in the return signal. It is noticed that OTDR can not only tell the existence and properties of loss points, but also show their locations by time delay from the onset of the input optical pulse. External conditions, including temperature change, affect the optical attenuation characteristics. These changes have an influence on the back scattering and can thereby be sensed by the reflectometer. For temperature measurement this also means that the optical fibre 6 should mechanically be decoupled from surroundings.

Another embodiment of the present invention measures the temperature distribution within the storage volume based on an Optical-Frequency-Domain-Reflectometry (OFDR). The OFDR uses the frequency-modulated continuous wave ranging technique, referring to the radar technology. In the system, a continuous waveform optical carrier with a periodic linear frequency sweep is induced. The detected optical echoes are with the same frequency sweep but with a delay, which is proportional to the propagation distance in the fibre. The signal reflected back to the start point interferes with a reference signal to produce a correlation signal in the frequency domain, observed by a spectrum analyzer or data-processing device. The OFDR is also used to detect temperature changes. As with OTDR temperature changes affect an optical attenuation characteristics which can be sensed by the reflectometer due to back scattering.

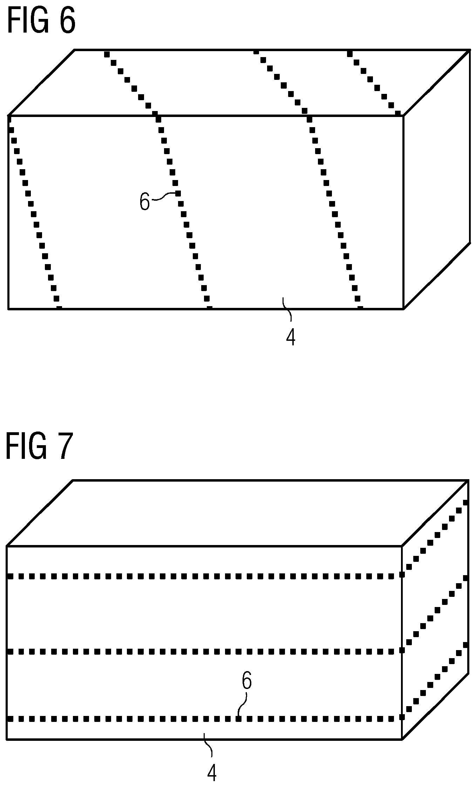

**Fig. 6** shows an embodiment of arranging an optical fibre 6. The optical fibre 6 is wrapped around the amount of heat storage elements 4, in particularly helically wrapped around the amount of heat storage elements 4. Here, the optical fibre 6 surrounds the amount of heat storage elements 4.

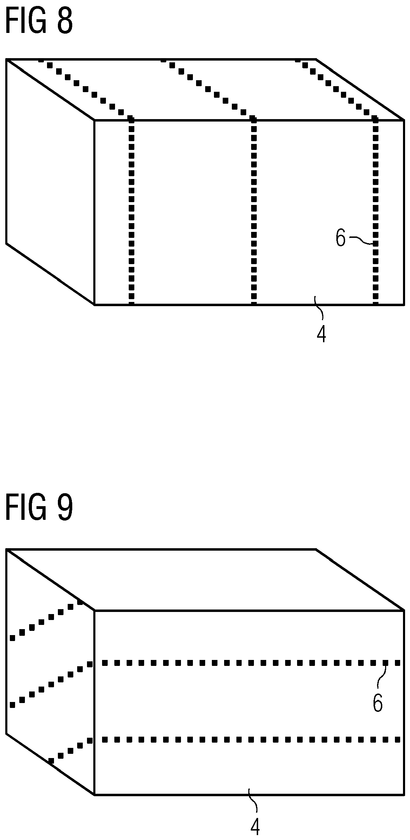

**Figures 7 to 9** show embodiments of arranging optical fibres 6, where a plurality of optical fibres 6 is loosely arranged within the amount of heat storage elements 4. The optical fibres 6 extend in different planes. In Fig. 7, the planes extend horizontally, in Fig. 8, the planes extend vertically, and in Fig. 9, the planes extend inclined. In any case, the planes are preferably arranged in parallel to each other. However, the parallel arrangement is not essential.

This means that optical fibres 6 can generally be installed within the amount of heat storage elements 4, around the amount of heat storage elements 4 or in proximity to the amount of heat storage elements 4 (inside insulation layers or around them) or as a combination of these. Combinations of the mentioned options are also possible.

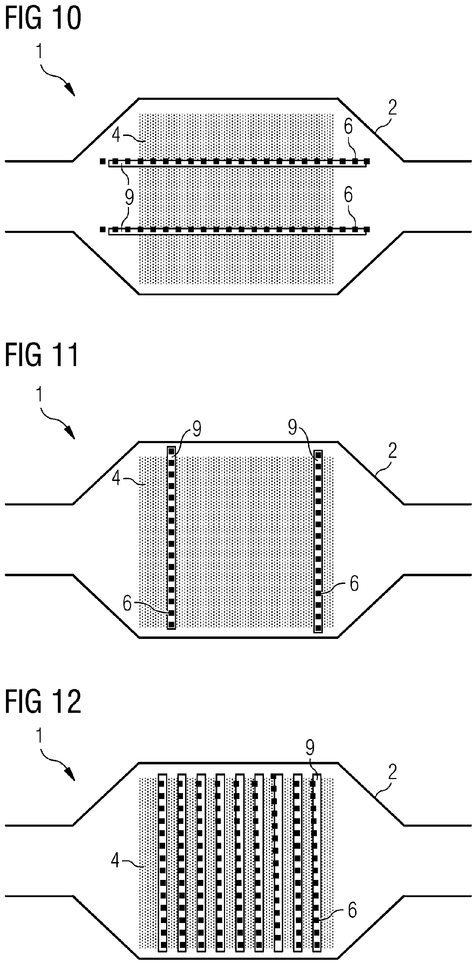

**Figures 10 to 15** show embodiments of arranging an optical fibre 6, where the optical fibre 6 is embedded in a protection device 9. The protection device 9 can be a flow guiding element, a structural support element, a channel, a tube or a plate.

Particularly if the protection device 9 is a plate, a plurality of optical fibres 6 can be embedded in the plate. The plate can also be used as a flow guiding element. If a protection device 9 is used, the protective layer 63 can be omitted.

The protecting device 9 can also serve as a structural support element. The protecting device 9 can be arranged horizontally, vertically, diagonally or in any other way. Combinations are also possible. In this way, the optical fibres 6 can be protected against possible damage even when the optical fibre 6 does not comprise a protective layer 63. The protecting device 9 is not limited in terms of shape, size, number, arrangement or other characteristics. Different kinds of protecting devices 9 can appropriately be used in the same heat accumulator 1.

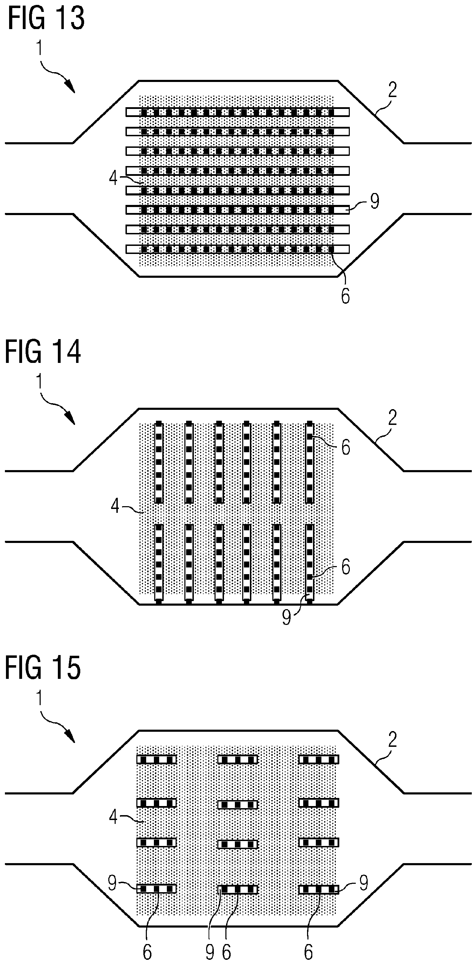

In Fig. 10, two protecting devices 9 with one or more embedded optical fibres 6 are horizontally arranged in parallel to each other. In Fig. 11, two protecting devices 9 with one or more embedded optical fibres 6 are vertically arranged in parallel to each other. In Fig. 12, a plurality of protecting devices 9 with one or more embedded optical fibres 6 are vertically arranged in parallel to each other. In Fig. 13, a plurality of protecting devices 9 with one or more embedded optical fibres 6 are horizontally arranged in parallel to each other. However, the parallel arrangement is not essential.

In Fig. 14, a first plurality of protecting devices 9 with one or more embedded optical fibres 6 are vertically arranged in parallel to each other at the upper part of Fig. 14, and a second plurality of protecting devices 9 with one or more embedded optical fibres 6 are vertically arranged in parallel to each other in the lower part of Fig. 14. Each protecting device 9 of the upper, first plurality of protecting devices 9 is aligned to a respective protecting device 9 of the lower, second plurality of protecting devices 9. Thereby, one of the protecting devices 9 of the first plurality of protecting devices 9 and one of the protecting devices 9 of the second plurality of protecting devices 9 extend in the same vertical plane.

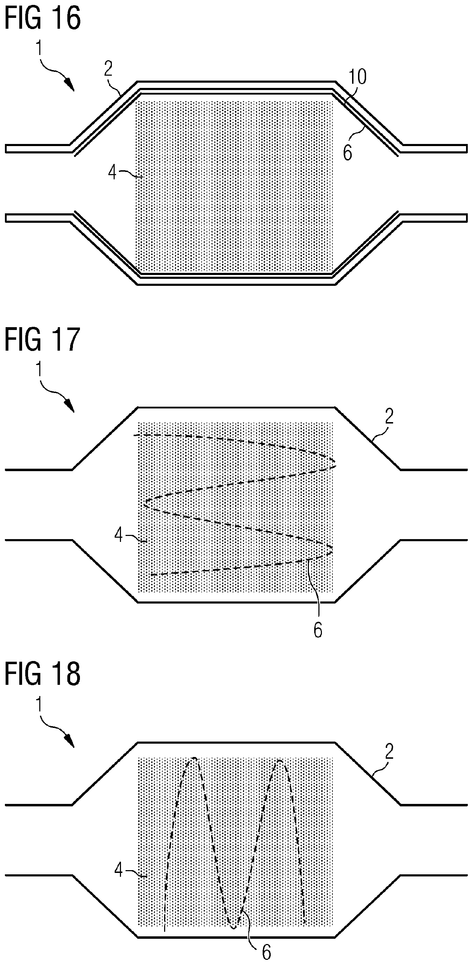

In Fig. 15, a first plurality of protecting devices 9 with one or more embedded optical fibres 6 are arranged within a first horizontal plane in the upper part of Fig. 15, a second plurality of protecting devices 9 with one or more embedded optical fibres 6 are arranged within a second horizontal plane in the lower upper part of Fig. 17, and a third and a fourth plurality of protecting devices 9, each with one or more embedded optical fibres 6, are arranged within a third and a fourth horizontal plane therebetween.

The first horizontal plane, the second horizontal plane, the third horizontal plane and the fourth horizontal plane are in parallel to each other.

Furthermore, each protecting device 9 of the first plurality of protecting devices 9 is aligned to a respective protecting device 9 of the second, third and fourth plurality of protecting devices 9.

In the embodiments of Figures 14 and 15, the plurality of optical fibres 6 is provided in a two-dimensional matrix when viewing the cross-section. In addition, the plurality of optical fibres 6 can be provided in a three-dimensional matrix when viewing the cross-section and a top view.

**Fig. 16** shows an embodiment of arranging an optical fibre 6. The heat exchange chamber 2 comprises a thermal insulation 10, and the optical fibre 6 is embedded in the insulation 10. In this way, the optical fibre 6 is protected within the thermal insulation 10 and safely provides information about a temperature distribution at an interface between the amount of heat storage elements 4 and the thermal insulation 10. A replacement of the optical fibre 6 can readily be done in the event of failure or any other case.

**Figures 17 and 18** show embodiments of arranging an optical fibre 6. The optical fibre 6 is loosely arranged within the amount of heat storage elements 4, wherein the optical fibre 6 is meandering horizontally and vertically, respectively. A single optical fibre 6 or alternatively several optical fibres 6, a long fibre or a short fibre can be used to obtain the spatial temperature distribution within the entire heat accumulator 1. Combinations are also considered.

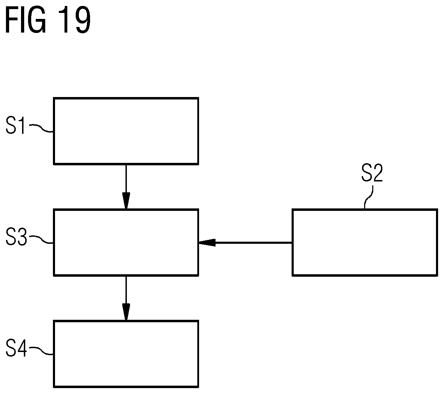

**Fig. 19** shows a block diagram of a method of determining a spatial temperature distribution in the heat accumulator 1 according to an embodiment. The method comprises a step of determining S1 temperatures at several locations of the optical fibre 6 based on the electric signal at a given time; a step of acquiring S2 information about the locations of the optical fibre 6 in the heat exchange chamber 2; a step of calculating S3 the spatial temperature distribution in a heat accumulator 1 based on the determined temperatures and based on the information about the locations of the optical fibre 6 in the heat exchange chamber 2; and a step of outputting S4 the calculated spatial temperature distribution of the given time.

For example, the spatial temperature distribution can be calculated by interpolation or extrapolation algorithms, for example by extrapolating or interpolating temperatures of locations of the same or different optical fibres 6, to obtain any spatial temperature distribution or a regular spatial temperature distribution in the shape of a regular matrix.

When the above mentioned steps are iteratively performed at different points of time, a spatial temperature distribution is obtained over the time.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A heat accumulator (1) comprising:
a heat exchange chamber (2) having a first opening (3) configured to pass through a working fluid and a second opening (5) configured to pass through a working fluid;
an amount of heat storage elements (4) filled in the heat exchange chamber (2);
an optical fibre (6) being arranged in or at the heat exchange chamber (2);
an emitter (7) which emits an electromagnetic radiation into the optical fibre (6);
a receiver (8) which receives the electromagnetic radiation from the optical fibre (6);
a converter (11) which converts the electromagnetic radiation received by the receiver (8) into an electric signal; and
a determining unit (12) which determines a temperature in or at the heat exchange chamber (2) based on the electric signal.

2. The heat accumulator (1) according to the preceding claim, wherein
the optical fibre (6) is, preferably helically, wrapped around the amount of heat storage elements (4).

3. The heat accumulator (1) according to any one of the preceding claims, wherein
a plurality of optical fibres (6) is provided in a two-dimensional or three-dimensional matrix.

4. The heat accumulator (1) according to any one of the preceding claims, wherein
the optical fibre (6) is loosely arranged within the amount of heat storage elements (4).

5. The heat accumulator (1) according to any one of the preceding claims, wherein
a plurality of optical fibres (6) is provided, wherein the optical fibres (6) extend in different planes.

6. The heat accumulator (1) according to claim 5, wherein the planes are in parallel to each other.

7. The heat accumulator (1) according to claim 5 or 6, wherein
the planes either extend horizontally, vertically or inclined.

8. The heat accumulator (1) according to any one of the preceding claims, wherein
a plurality of optical fibres (6) is provided, wherein the optical fibres (6) extend in the same plane.

9. The heat accumulator (1) according to any one of the preceding claims, wherein
the optical fibre (6) is embedded in a protection device (9) .

10. The heat accumulator (1) according to claim 9, wherein
the protection device (9) is a flow guiding element, a structural support element, a channel, a tube or a plate.

11. The heat accumulator (1) according to claim 10, wherein
a plurality of optical fibres (6) is embedded in the plate.

12. The heat accumulator (1) according to any one of the preceding claims, wherein
the heat exchange chamber (2) comprises an insulation (10), and the optical fibre (6) is embedded in the insulation (10) .

13. The heat accumulator (1) according to any one of the preceding claims, wherein
the optical fibre (6) is meandering.

14. The heat accumulator (1) according to any one of the preceding claims, wherein
the determining unit (12) determines the temperature in or at the heat exchange chamber (2) based on the electric signal by using either the principle of Fibre-Bragg-Gratings (FBG), Optical-Fibre-Time-Domain-Reflectometry (OTDR), or Optical-Frequency-Domain-Reflectometry (OFDR).

15. A method of determining a spatial temperature distribution in a heat accumulator (1), the heat accumulator (1) comprising a heat exchange chamber (2) having a first opening (3) configured to pass through a working fluid and a second opening (5) configured to pass through a working fluid; an amount of heat storage elements (4) filled in the heat exchange chamber (2); at least one optical fibre (6) being arranged in or at the heat exchange chamber (2) and connected to an emitter (7), which emits an electromagnetic radiation into the optical fibre (6), and to a receiver (8), which receives the electromagnetic radiation from the optical fibre (6); and a converter (11) which converts the electromagnetic radiation received by the receiver (8) into an electric signal, the method comprising the following steps:
determining (S1) temperatures at several locations of the at least one optical fibre (6) based on the electric signal at a given time;
acquiring (S2) information about the locations of the at least one optical fibre (6) in the heat exchange chamber (2);
calculating (S3) the spatial temperature distribution in a heat accumulator (1) based on the determined temperatures and based on the information about the locations of the at least one optical fibre (6) in the heat exchange chamber (2); and
outputting (S4) the calculated spatial temperature distribution of the given time.
